Europäisches Patentamt

European Patent Office

Office européen des brevets

(19)

(11) Publication number: **0 079 715**
**B1**

(12) **EUROPEAN PATENT SPECIFICATION**

(45) Date of publication of patent specification: **13.08.86**

(51) Int. Cl.⁴: **B 60 T 17/02**

(21) Application number: **82305814.4**

(22) Date of filing: **02.11.82**

(54) **Combined pressure relief and unloader valve.**

(30) Priority: **07.11.81 GB 8133645**

(43) Date of publication of application:
**25.05.83 Bulletin 83/21**

(45) Publication of the grant of the patent:
**13.08.86 Bulletin 86/33**

(84) Designated Contracting States:
**DE FR IT**

(56) References cited:
**AU-A-1 508 070**
**DE-A-2 232 832**
**DE-C- 945 900**
**US-A-3 613 717**

(73) Proprietor: **LUCAS INDUSTRIES public limited company**
**Great King Street**
**Birmingham, B19 2XF West Midlands (GB)**

(72) Inventor: **Harrison, Anthony William**
**63 Middle Park Road**
**Selly Oak Birmingham B29 4BH (GB)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

This invention relates to a combined pressure relief and unloader valve suitable for use in the high pressure hydraulic system of a motor vehicle.

It is known to provide in high pressure hydraulic systems of motor vehicles, e.g. in powered hydraulic braking systems, a pump which charges an accumulator with pressurised hydraulic fluid. In such systems the pump may run to charge the accumulator until the pressure in the accumulator reaches a predetermined cut-out pressure, whereupon an unloader valve is opened to connect the pump outlet to reservoir. The pump then runs against a small pressure head determined by pressure losses in the system until, due to use of powered equipment, the pressure in the accumulator falls to a predetermined cut-in pressure at which the unloader valve is again closed, thereby causing the pump output to flow to the accumulator to recharge the accumulator.

In order to prevent damage to the pump or other system components in the event that, due to malfunction, the unloader valve does not open at the cut-out pressure, a relief valve may be provided to connect the pump to reservoir if the pump output pressure exceeds a predetermined relief pressure, the relief pressure being higher than the cut-out pressure.

A valve is proposed in GB—A—1445081 which, when energised, adopts a closed position and which when deenergised acts as a pressure reducing valve, acting to maintain a substantially constant outlet pressure despite variations in inlet pressure. When the valve is energised it is conceivable that, if inlet pressure becomes excessive, the pilot valve may be lifted from its seat, and the valve would act as a pressure relief valve. It is not, however intended that the valve should operate in this way, and in any event the valve cannot be selectively moved to an open position to act as an unloader valve.

A pressure relief valve is proposed in US—A—3613717 corresponding to the preamble of claim 1 in which the relief pressure is variable above a certain minimum by varying the current through a control coil. However, the valve is clearly intended only to act as a relief valve, and is not intended to act as an unloader valve since the pilot valve member is permanently biased towards its seat by a spring which determines the normal minimum relief pressure of the valve.

The present invention relates to a combined pressure relief and unloader valve assembly selectively operable in a pressure relief mode to vent overpressure from a fluid system to which the valve is connected or in an unloader mode to offer substantially no resistance to fluid flow, the valve assembly comprising: an inlet; an outlet; a main valve member for controlling communication between the inlet and the outlet; a pilot valve for controlling movement of the main valve member; and an electrical actuator for controlling the opening pressure of the pilot valve, the electrical actuator being such that when it is not energised substantially no load is applied to the movable member of the pilot valve so that the main valve member can readily be moved to the open position.

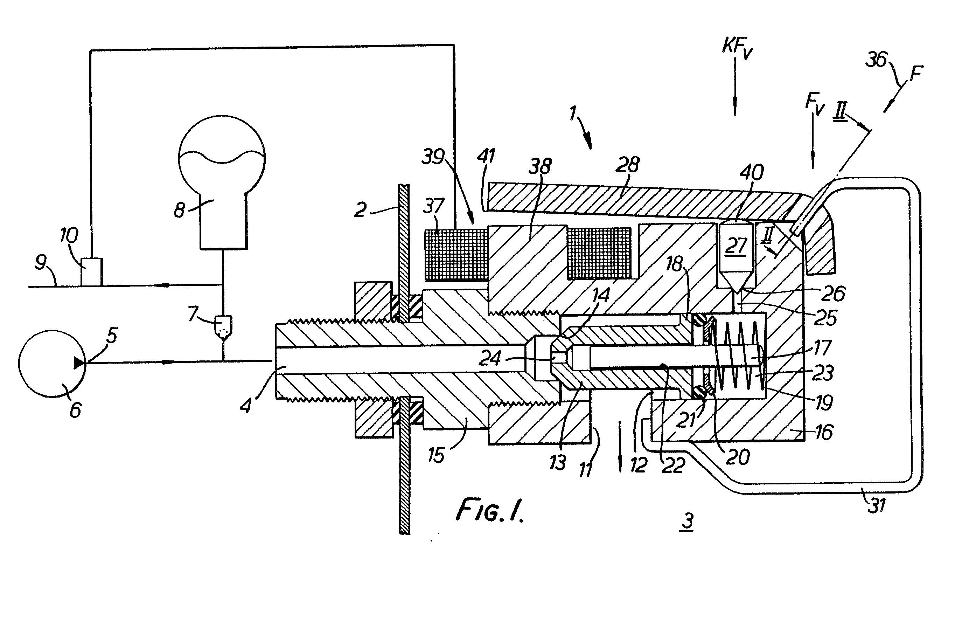

The invention is characterised in that the electrical actuator includes a lever which is pivotable on a fulcrum defined by the movable member of the pilot valve, by energising the electrical actuator, from a first position (Figure 1) which the lever adopts when the electrical actuator is not energised and in which it is biased by a spring into engagement with a stop located to one side of the fulcrum into a second position in which the lever is clear of the stop and the predetermined load of the spring is applied to the movable member of the pilot valve to maintain the pilot valve closed until it is subjected to a pressure determined by the load of the spring.

If such a valve is incorporated in a high pressure hydraulic system with the inlet of the valve connected to the outlet of the pump and the outlet of the valve connected to reservoir the electrical actuator can be controlled by a pressure transducer which emits a signal when the pressure in an accumulator connected to the pump falls below a predetermined cut-in pressure. The control signal will then cause the valve to close at the cut-in pressure and allow the pump to charge the accumulator. When the accumulator pressure reaches a cut-out pressure the transducer should cease to emit a signal and this will cause the valve to open and re-connect the pump to reservoir. If, however, the transducer continues to emit a signal even when the accumulator pressure reaches the cut-out pressure, the valve will remain closed until the pump output pressure reaches a value sufficient to open the valve in the presence of a control signal, whereupon the valve will open to limit the pump output pressure. In such a system the pressure at which the valve will open in the presence of a control signal is preferably about 689 kPa (100 psi) above the cut-out pressure, and accordingly in the event of transducer failure the valve operates as a relief valve which opens at 689 kPa (100 psi) above cut-out pressure.

The invention will be better understood from the following description of preferred embodiments thereof, given by way of example only, reference being had to the accompanying drawings, wherein:

Figure 1 is a view, partially in cross-section, showing a preferred embodiment of the invention;

Figure 2 is a cross-section on the line II—II of Figure 1; and

Figure 3 shows a blank for use in the preferred embodiment of the invention.

Referring firstly to Figure 1 an embodiment of a control valve 1 according to the present invention is mounted in the wall 2 of a hydraulic fluid reservoir 3 such that the valve is immersed in hydraulic fluid. The inlet 4 of the valve is connected to the outlet 5 of a hydraulic pump 6 which is continuously driven e.g. by a motor vehicle engine. The outlet 5 of the pump is connected via a non-return valve 7 to a hydraulic accumulator 8 of any suitable design. An outlet 9 from the accumulator supphers hydraulic fluid, as required, to operate vehicle systems, e.g. a powered braking system or a powered suspension system.

A transducer 10 senses the pressure in the accumulator and emits a signal in the form of an electrical voltage when the pressure in the accumulator falls below a cut-in pressure, for example 6.89 MPa (1000 psi). As a result the valve 1 closes (as hereinafter explained) and the pump 6 begins to re-charge the accumulator. When the pressure sensed by the transducer 10 reaches a cut-out pressure, for example 10.34 MPa (1500 psi), the transducer 10 ceases to emit a signal and thereby indicates that the accumulator 8 is fully charged.

The valve 1 includes an outlet 11 which is connected to the inlet 4 by a valve chamber 12 in which is located a main valve member 13. The main valve member is engageable with a main valve seat 14 formed on a bush 15 to isolate the inlet 4 from the outlet 11. The bush 15 is screw threaded into the body 16 of the control valve 1 and it will be noted that since the valve 1 is located in the reservoir, the screw threaded connection between the bush 15 and body 16 need not be sealed.

The main valve member 13 is mounted as a clearance fit on a stem 17. The stem 17 is free to move relative to the valve body 16, and this fact, combined with the small axial length of the land 18 of the main valve member, means that the main valve member can seat against the main valve seat 14 even if the main valve seat is slightly eccentric to the valve chamber 12. The main valve member 13 is biased towards the seat 14 by a light spring 19 which acts on the main valve member 13 via a dished washer 20 and O-ring 21. Thus, in the rest state of the valve, the main valve member 13 is in engagement with the seat 14 and the clearance passage 22 between the main valve member 13 and stem 17 provides a flow-restricting connection between a pilot chamber 23 formed to the rear of the main valve member 13 and an opening 24 in the end of the main valve member 13. Relative movement which occurs in use between the main valve member 13 and the stem 17 helps to dislodge any debris which may become lodged in the passage 22 and thus renders the passage 22 self-cleaning.

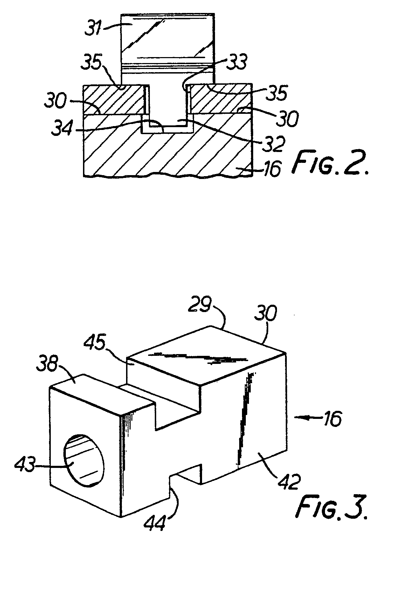

A pilot passage 25 connects the pilot chamber 23 to the reservoir 3 and is formed with a pilot valve seat 26 which is engageable by a pilot valve member 27 to isolate the pilot chamber 23 from the reservoir. The upper end of the pilot valve member 27 stands proud of the adjacent surface of the valve body 16 and provides a fulcrum for a steel lever 28 which is mounted on the valve body. The edge 29 of the valve body 16 provides a line-contact stop 30 for the lever adjacent the valve member 27, and a generally C-shaped spring 31 applies a force F to the lever biasing the lever towards the stop 30. The spring 31 is formed of flat strip material and includes a tongue 32 (Figure 2) which passes through a slot 33 formed in the lever 28 and seats in a groove 34 formed in the valve body. Shoulders 35 formed on each side of the tongue 32 engage the lever 28 so that the line of action 36 of the spring 31 passes through the stop 30. Thus, although the spring 31 is pre-loaded to apply a well defined force F to the lever 28 it does not resist rotation of the lever 28 about the stop 30. Accordingly, the spring 31 does not prevent the pilot valve member 27 lifting in response to fluid pressure acting on the pilot valve member 27 over the area of the pilot valve seat 26.

Finally, a coil 37 is located about an upstanding portion 38 of the valve body 16 to form an electro-magnet 39 which, in response to the voltage emitted by transducer 10, attracts the lever 28. The electro-magnet 39 is sufficiently powerful to rotate the lever 28 about the fulcrum 40 formed by the pilot valve member 27, thereby bringing the edge 41 of the lever 28 into engagement with a stop provided by the upstanding portion 38. This will cause the lever to lift off the stop 30 and the spring 31 will thus apply a vertical force $F_v$ to the lever. This force will act on the pilot valve member 27 via the lever 28 to load the pilot valve member 27 with a force $KF_v$ where K is a constant.

In use, when the vehicle engine is started the pump 6 will start to deliver hydraulic fluid. If the pressure in the accumulator 8 is below the cut-in pressure the transducer 10 will emit a signal which energizes the electro-magnet 39 to attract the lever 28 and thereby apply a load to the pilot valve member as described above. Fluid pressure at the inlet 4 will be supplied via opening 24 and passage 22 to pilot chamber 23 and will there assist the spring 19 to maintain the main valve member 13 in engagement with seat 14, thereby maintaining the inlet 4 isolated from outlet 11. The pump 6 will therefore charge the accumulator 8.

If the transducer 10 is working correctly, when the accumulator pressure reaches the cut-out pressure, the transducer will cease to emit a signal and the electro-magnet 39 will thus become de-energized. The lever 28 will return to engagement with the stop 30 and the pilot valve member 27 will lift to allow pressure in the pilot chamber 23 to decay. The main valve member 13 will accordingly move under the influence of inlet pressure away from seat 14 to connect the inlet 4 to outlet 11. The pump will then discharge through the valve 1 direct to reservoir against a small pressure head determined by spring 19 and system pressure losses.

If, however, the transducer 10 continues to emit a signal after cut-out pressure is reached, the electro-magnet 39 will remain energised and pump output pressure will continue to rise until the pressure in the pilot chamber 23 reaches a level at which the loading $KF_v$ on the pilot valve member is insufficient to maintain the pilot valve member 27 in engagement with the pilot valve seat 26. The pilot valve member 27 will then lift to limit the pressure in the pilot chamber. The limited pressure in the pilot chamber will in turn limit the pressure at the inlet 4 to a value $P_{max}$ determined by the equation:

$$P_{max} = \frac{KF_v}{A_3} \cdot \frac{A_2}{A_1} + S$$

where:

$A_1$=effective area of the main valve member over which input prsesure acts

$A_2$=effective area of the main valve member over which pressure in the pilot chamber acts

$A_3$=area of the pilot valve seat

S=a small constant determined by the spring 19.

When the inlet pressure exceeds $P_{max}$ the main valve member 13 will move out of engagement with the main valve seat 14 to reduce the inlet pressure to $P_{max}$.

It will thus be seen that the above described valve acts as an electrically controlled unloader valve and as a pressure relief valve.

Since the load $KF_v$ which the spring 31 imposes on the pilot valve member 27 when the electro-magnet 39 is energized can be accurately set by suitable selection of spring 31, the relief pressure $P_{max}$ can be accurately selected. Preferably $P_{max}$ is about 689 kPa (100 psi) above the normal cut-out pressure.

Referring now to Figure 3, the valve body 16 is advantageously formed by cutting a suitable length of rectangular steel bar-stock 42 and then drilling a hole 43 to form the valve chamber 12. A groove 44 is then milled in the blank to intersect the bore 43, thereby forming the outlet 11 and providing a seat for the spring 31. A second groove 45 is then formed in the blank to define the upstanding portion 38. The blank is then machined as necessary to complete the valve body 16.

## Claims

1. A combined pressure relief and unloader valve assembly selectively operable in a pressure relief mode to vent overpressure from a fluid system to which the valve is connected or in an unloader mode to offer substantially no resistance to fluid flow, the valve assembly comprising: an inlet (4); an outlet (11); a main valve member (13) for controlling communication between the inlet (4) and the outlet (11); a pilot valve (26, 27) for controlling movement of the main valve member (13); and an electrical actuator (28, 39) for controlling the opening pressure of the pilot valve, the electrical actuator being such that when it is not energised substantially no load is applied to the movable member (27) of the pilot valve so that the main valve member (13) can readily be moved to the open position characterised in that the electrical actuator includes a lever (28) which is pivotable on a fulcrum (410) defined by the movable member (27) of the pilot valve, by energising the electrical actuator (39), from a first position (Figure 1) which the lever (28) adopts when the electrical actuator (39) is not energised and in which it is biased by a spring (31) into engagement with a stop (30) located to one side of the fulcrum (40) into a second position in which the lever (28) is clear of the stop (30) and the predetermined load of the spring (31) is applied to the movable member (27) of the pilot valve to maintain the pilot valve closed until it is subjected to a pressure determined by the load of the spring (31).

2. A combined pressure relief and unloader valve according to claim 1 wherein the main valve member (13) engages a main valve seat (14) to isolate the inlet (4) from the outlet (11), characterised in that a restricted passage (22) extends from upstream of the main valve seat (14) to a pilot chamber (23) the pressure in the pilot chamber (23) being controlled by the pilot valve (26, 27) and being effective to control the opening pressure of the main valve member (13).

3. A combined pressure relief and unloader valve according to claim 2 characterised in that the restricted passage (22) extends through the main valve member (13).

4. A combined pressure relief and unloader valve according to claim 3 characterised in that the restricted passage (22) is formed by two surfaces which move relative to each other as the main valve member (13) moves.

5. A combined pressure relief and unloader valve according to any preceding claim characterised in that the lever (28) is pivotable from the first position to the second position by the action of an electromagnet (39) formed by a coil (37) mounted on part (38) of the body of the valve and operable to attract a portion of the lever (28) located on the opposite side of the fulcrum (40) from the stop (30).

6. A combined pressure relief and unloader valve according to any preceding claim characterised in that the line of action of the spring (31) passes through the stop (30) so that the spring provides substantially no resistance to pivotal movement of the lever (28) about the stop (30).

7. A combined pressure relief and unloader valve according to any preceding claim characterised in that the valve body (16) is a unitary structure machined from a length of steel bar.

## Patentansprüche

1. Kombiniertes Überdruck- und Druckregelventil, das wahlweise als Überdruckventil zum Entlasten einer fluidbetriebenen Anlage, an welche das Ventil angeschlossen ist, von Überdruck oder als Druckregelventil, das einer Fluidströmung keinen wesentlichen Widerstand entgegensetzt, zu arbeiten vermag, mit einem Einlaß (4), einem Auslaß (11), einem Hauptventilverschlußglied (13) zum Steuern einer Verbindung zwischen dem Einlaß (4) und dem Auslaß (11), einem Schaltventil (26, 27) zum Steuern einer Bewegung des Hauptventilverschlußgliedes (13), und einer elektrischen Betätigungsvorrichtung (28, 39) zum Steuern des Öffnungsdruckes des Schaltventils, wobei die elektrische Betätigungsvorrichtung so ist, daß, wenn sie nicht eingeschaltet ist, keine wesentliche Last auf das bewegliche Bauteil (27) des Schaltventils ausgeübt wird, so daß das Hauptventilverschlußglied (13) ohne weiteres in die Offenstellung bewegt werden kann, dadurch gekennzeichnet, daß die elektrische Betätigungsvorrichtung einen Hebel (28) umfaßt, der durch Erregen der elektrischen Betätigungsvorrichtung (39) um ein vom beweglichen Bauteil (27) des Schaltventils gebildetes Kippauflager (40) aus einer ersten Stellung (Fig. 1), die er bei nicht eingeschlateter elektrischer Betätigungsvorrichtung (39) einnimmt und in der er von einer Feder (31) in Anlage an einem auf einer Seite des Kippauflagers (40) angeordneten Anschlag (30) gedrängt wird, in eine zweite Stellung schwenkbar ist, in der er vom Anschlag (30) genügenden Abstand hat und in der die vorbestimmte Last der Feder (31) auf das bewegliche Bauteil (27) des Schaltventils ausgeübt wird und das Schaltventil geschlossen hält, bis es einem von der Last der Feder (31) bestimmten Druck ausgesetzt wird.

2. Kombiniertes Überdruck- und Druckregelventil nach Anspruch 1, bei dem das Hauptventilverschlußglied (13) an einem Hauptventilsitz (14) anliegt und den Einlaß (4) vom Auslaß (11) trennt, dadurch gekennzeichnet, daß von einer in Strömungsrichtung vor dem Hauptventilsitz (14) gelegenen Stelle bis zu einer Schaltkammer (23) sich ein enger Durchlaß (22) erstreckt, wobei der Druck in der Schaltkammer (23) durch das Schaltventil (26, 27) gesteuert wird und den Öffnungsdruck des Hauptventilverschlußgliedes (13) steuert.

3. Kombiniertes Überdruck- und Druckregel-ventil nach Anspruch 2, dadurch gekennzeichnet, daß der enge Durchlaß (22) das Hauptventilverschlußglied (13) durchsetzt.

4. Kombiniertes Überdruck- und Druckregelventil nach Anspruch 3, dadurch gekennzeichnet, daß der enge Durchlaß (22) von zwei Flächen gebildet ist, die sich bei einer Bewegung des Hauptventilverschlußgliedes (13) relativ zueinander bewegen.

5. Kombiniertes Überdruck- und Druckregelventil nach einem der Ansprüche 1 bis 4, dadurch gekennzeichnet, daß der Hebel (28) aus der ersten in die zweite Stellung durch die Wirkung eines Elektromagneten (39) schwenkbar ist, der von einer an einem Abschnitt (38) des Ventilhauptteils angeordneten Spule (37) gebildet ist und einen auf der dem Anschlag (30) entgegengesetzten Seite des Kippauflagers (40) angeordneten Abschnitt des Hebels (28) anzieht.

6. Kombiniertes Überdruck- und Druckregelventil nach einem der Ansprüche 1 bis 5, dadurch gekennzeichnet, daß die Wirkungslinie der Feder (31) durch den Anschlag (30) geht, so daß die Feder einer Schwenkbewegung des Hebels (28) um den Anschlag (30) keinen wesentlichen Widerstand entgegensetzt.

7. Kombiniertes Überdruck- und Druckregel-ventil nach einem der Ansprüche 1 bis 6, dadurch gekennzeichnet, daß das Ventilhauptteil (16) aus einem Stück Stangenmaterial aus Stahl einteilig herausgearbeitet ist.

**Revendications**

1. Dispositif de valve combiné pour la décom-presion et la décharge, utilisable en mode de décompression pour supprimer une surpression dans un système à fluide auquel la vanne est connectée, et, en mode de décharge, pour n'offrir sensiblement aucune résistance à l'écoulement de fluide,

le dispositif de valve comprenant:

— une entrée (4),
— une sortie (11),
— un organe de valve principal (13) pour contrôler la communication entre l'entrée (4) et la sortie (11),
— une valve pilote (26, 27) pour contrôler le mouvement de l'organe de valve principal (13), et
— un actionneur électrique (28, 39) pour contrôler la pression d'ouverture de la valve pilote, cet actionneur étant calculé pour que, lorsqu'il n'est pas alimenté en courant, pratiquement aucune charge n'est appliquée à l'organe mobile (27) de la valve pilote si bien que l'organe de valve principal (13) peut facilement être déplacé vers la position d'ouverture, caractérisé en ce que l'actionneur électrique comprend un levier (28) qui peut tourner sur un pivot (40) défini par l'organe mobile (27) de la valve pilote, pour passer, quand ledit actionneur est alimenté en courant, d'une première position (Figure 1), adoptée par le levier (28) quand l'actionneur n'est pas alimenté et vers laquelle il est poussé par un ressort (31) pour venir en appui sur une butée (30) située d'un côté du pivot (40), à une seconde position, dans laquelle ledit levier (28) est écarté de la butée (30) et dans laquelle la force prédéterminée du ressort (31) est appliquée à l'organe mobile (27) de la valve pilote afin de maintenir celle-ci fermée tant qu'elle n'est pas soumise à une pression qui est prédéterminée par la force du ressort (31).

2. Dispositif selon la revendication 1, dans lequel l'organe de valve principal (13) vient en contact avec un siège de valve principal (14) de façon à isoler l'entrée (4) de la sortie (11), caractérisé en ce qu'un passage étranglé (22) va de l'amont de la valve principale à une chambre pilote (23) dont la pression est contrôlée par la valve pilote (26, 27) et peut contrôler la pression d'ouverture de l'organge de valve principal (13).

3. Dispositif selon la revendication 1, caractérisé en ce que ledit passage étranglé (22) s'étend à travers l'organe de valve principal (13).

4. Dispositif selon la revendication 3, caractérisé en ce que ledit passage étranglé (22) est formé par deux surfaces qui se déplacent l'une par rapport à l'autre lors du mouvement de l'organe de valve principal (13).

5. Dispositif selon l'une quelconque des revendications précédentes, caractérisé en ce que le levier (28) peut pivoter de la première position à la seconde sous l'action d'un électro-aimant (39) constitué d'une bobine (37) montée sur une partie (38) du corps de la valve, et capable d'attirer une partie du levier (28) située du côté opposé à la butée (30) par rapport au pivot (40).

6. Dispositif selon l'une quelconque des revendications précédentes, caractérisé en ce que la ligne d'action du ressort (31) passe par la butée (30), si bien que ledit ressort n'oppose pratiquement aucune résistance au pivotement du levier (28) autour de la butée (30).

7. Dispositif selon l'une quelconque des revendications précédentes, caractérisé en ce que le corps de valve (16) est une pièce unitaire usinée à partir d'une longueur de barre d'acier.

*Fig.I.*

0 079 715

FIG.2.

FIG.3.